Europäisches Patentamt

European Patent Office

Office européen des brevets

(19)

(11)     EP 0 923 705 B1

(12)     EUROPÄISCHE PATENTSCHRIFT

(45) Veröffentlichungstag und Bekanntmachung des Hinweises auf die Patenterteilung:
     **27.03.2002   Patentblatt 2002/13**

(21) Anmeldenummer: **97942804.2**

(22) Anmeldetag: **03.09.1997**

(51) Int Cl.⁷: **G01B 11/24**

(86) Internationale Anmeldenummer:
     **PCT/DE97/01975**

(87) Internationale Veröffentlichungsnummer:
     **WO 98/10244 (12.03.1998 Gazette 1998/10)**

(54) **VERFAHREN UND VORRICHTUNG ZUR BESTIMMUNG DER RÄUMLICHEN KOORDINATEN VON GEGENSTÄNDEN**

METHOD AND DEVICE FOR DETERMINING THE SPATIAL COORDINATES OF OBJECTS

PROCEDE ET DISPOSITIF DE DETERMINATION DES COORDONNEES SPATIALES D'OBJETS

(84) Benannte Vertragsstaaten:
     **CH DE ES FR GB IT LI NL**

(30) Priorität: **05.09.1996  DE 19637682**

(43) Veröffentlichungstag der Anmeldung:
     **23.06.1999   Patentblatt 1999/25**

(73) Patentinhaber: **FRAUNHOFER-GESELLSCHAFT ZUR FÖRDERUNG DER ANGEWANDTEN FORSCHUNG E.V.**
     **80636 München (DE)**

(72) Erfinder:
     • **SCHREIBER, Wolfgang**
       **D-07747 Jena (DE)**
     • **KIRSCHNER, Volker**
       **NL-2600 AD Delft (NL)**

(74) Vertreter: **Pfenning, Meinig & Partner**
     **Kurfürstendamm 170**
     **10707 Berlin (DE)**

(56) Entgegenhaltungen:
     **DE-A- 4 416 108**

     • **SCHREIBER W ET AL: "OPTISCHE DREIKOORDINATENMESSUNG MIT STRUKTURIERTER BELEUCHTUNG" TECHNISCHES MESSEN TM 1982 - 1988 INCOMPLETE, Bd. 62, Nr. 9, 1.September 1995, Seiten 321-327, XP000527989**

## Beschreibung

Die Erfindung betrifft eine Vorrichtung und ein Verfahren zur Vermessung von Entfernungen und/oder räumlichen Koordinaten von Gegenständen und/oder deren zeitlicher Änderung nach den Oberbegriffen der Ansprüche 1 und 9.

Derartige Vorrichtungen und Verfahren werden für 3D-Meßverfahren insbesondere im Maschinenbau, Automobilbau, Keramikindustrie, Schuhindustrie, Schmuckindustrie, Medizin und weiteren Bereichen verwendet. Sie dienen der Überprüfung der Maßhaltigkeit und Qualitätskontrolle von Bauteilen in der Fertigung oder auch der Digitalisierung von Entwürfen, Modellen und Mustern. Zunehmendes Interesse für 3D-Meßverfahren gibt es insbesondere auch in der Medizin. Hier ergeben sich durch 3D-Vermessungen neue Möglichkeiten zur Diagnostik und in Verbindung mit Digitalisierungssystemen in der plastischen Chirurgie.

Die steigenden Forderungen nach einer weitgehend vollständigen Qualitätskontrolle im laufenden Produktionsprozeß sowie nach der Digitalisierung der Raumform von Prototypen machen die Aufnahme von Oberflächentopografien zu einer immer häufiger gestellten Meßaufgabe. Dabei stellt sich die Aufgabe, die Koordinaten einzelner Punkte der Oberfläche der zu vermessenden Gegenstände in kurzer Zeit zu bestimmen. Es gibt unterschiedliche Ansätze, sowohl das Zeit- als auch das Antastproblem durch den Einsatz optischer Meßverfahren zu lösen. Der Vorteil optischer Meßverfahren liegt in der berührungslosen und damit rückwirkungsfreien Messung sowie darin, daß die Informationen über das Objekt in bildhafter Form und damit leicht verständlich vorliegen. Zu diesen optischen Meßverfahren gehört die Streifenprojektionstechnik einschließlich der Gray-Code-Technik, das Moiréverfahren, das holografische und Speckle-Contouring-Verfahren sowie die Fotogrammetrie.

Charakteristisch für diese Verfahren ist, daß die interessierenden Meßgrößen, d.h. die Raumkoordinaten der Oberfläche von Gegenständen, indirekt aus Phasenmeßwerten in Schnittlinienbildern von Lichtmustern, beispielsweise Streifenmustern, die auf das Projekt projiziert werden, aus Phasenmeßwerten in Moirés, aus Koordinaten der Durchstoßungspunkte von Beobachtungsstrahlen durch die Empfängerebene sowie aus Parametern bestimmt werden, die die Geometrie der Meßanordnung, d.h. die Lichtquellen, optischen Bauelemente sowie die Bildaufzeichnungsvorrichtung charakterisieren. Sind die Geometrieparameter der Meßanordnung bekannt, kann man aus drei linear voneinander unabhängigen Phasenmeßwerten und Bild- bzw. Pixelkoordinaten die Koordinaten der Meßpunkte auf der Oberfläche des Gegenstandes in einem Sensorkoordinatensystem durch Triangulation berechnen.

Aus der DD 280 169 A1 ist ein Verfahren zur Vermessung der Form bzw. Formänderung von Körpern mit streuender Oberfläche bekannt, bei dem mittels dreier voneinander unabhängiger Flächenscharen gleicher Helligkeit sowie unter Berücksichtigung der Geometrieparameter der Beleuchtungs- und Aufnahmevorrichtung für jeden Meßpunkt auf der Oberfläche des zu vermessenden Körpers drei Raumkoordinaten bestimmt werden. Hierbei ist es jedoch nötig, daß auf der Oberfläche des Körpers ein Bezugspunkt als Nullpunkt eines Koordinatensystems festgelegt wird, relativ zu dem die Koordinaten der restlichen Oberflächenpunkte bestimmt werden. Für das Zusammenfügen von Teilansichten sind darüber hinaus Paßmarkierungen am Objekt erforderlich.

Aus STAHS und WAHL, "Oberflächenvermessung mit einem 3D-Robotersensor", ZPF Zeitschrift für Photogrammetrie und Fernerkundung 6/1990, Seiten 190 - 202, ist eine Meßvorrichtung bekannt, die einen Sensor zur Bildaufnahme sowie mindestens zwei Projektoren aufweist. Hierbei wird zur Vermessung des Gegenstandes als Triangulationstechnik das codierte Lichtverfahren angewandt. Die Belichtung des Gegenstandes mit einem Streifenmuster erfolgt dabei durch denjenigen Projektor, der in bezug auf den Gegenstand und in bezug auf die Position des Sensors die beste Ausleuchtung des Gegenstandes ermöglicht.

Nachteilig an den Verfahren nach dem Stand der Technik ist, daß die Eigenschaften, d.h. die Geometrieparameter der Meßvorrichtung einen Einfluß auf die Bestimmung der Koordinaten der Meßpunkte besitzen. Daher müssen diese Geometrieparameter gewöhnlich vor Beginn der Messung durch Einmessen eines bekannten Objektes bestimmt werden.

Zur Bestimmung der drei Raumkoordinaten jedes Oberflächenpunktes des zu vermessenden Objektes werden drei Maßzahlen benötigt, die gewöhnlich aus einem Phasenmeßwert und den zwei Pixelkoordinaten des Sensors bestehen. Nachteilig hieran ist, daß die räumliche Auflösung durch die Sensorauflösung beschränkt wird.

Aufgabe der vorliegenden Erfindung ist es, ein Verfahren und eine Vorrichtung zur Bestimmung der räumlichen Koordinaten von Gegenständen und/oder deren zeitlicher Änderung zur Verfügung zu stellen, das sich selbst kalibriert und eine hohe Meßpunktdichte bei zugleich rascher Koordinatenbestimmung ermöglicht.

Diese Aufgabe wird durch das Verfahren und die Vorrichtung nach den Oberbegriffen der Ansprüche 1 und 9 in Verbindung mit ihren kennzeichnenden Merkmalen gelöst.

Dadurch, daß der Gegenstand aufeinanderfolgend aus jeder von mindestens zwei vorbestimmten Richtungen und aus jeder dieser Richtungen wiederum mit mindestens zwei unabhängigen Lichtmustern nacheinander oder aus jeder Richtung mit einem Lichtmuster beleuchtet wird, dessen Lichtintensität als Summe zweiter unabhängiger Lichtmuster beschrieben werden kann, stehen insgesamt mindestens vier Aufnahmen unabhängiger Lichtmuster oder zwei Aufnahmen voneinander unabhängiger und aus zwei unabhängigen Lichtmustern zusammengesetzter Lichtmuster zur Verfügung. Dies bedeutet, daß pro Meßpunkt mindestens vier Phasenmeßwerte aus den insgesamt vier unabhängigen Lichtmustern bestimmt werden können. Damit stehen pro Meßpunkt mehr als die zur Koordinatenbestimmung des Meßpunktes benötigten drei unabhängigen Meßwerte zur Verfügung, so daß mit Hilfe der überzähligen Meßwerte zusätzlich die Geometrieparameter der Meßvorrichtung mit Hilfe ansonsten bekannter mathematischer Verfahren, wie beispielsweise dem Bündelausgleich, bestimmt werden können.

Allein aus den vier Phasenmeßwerten pro Meßpunkt lassen sich sämtliche benötigten Parameter und Koordinaten bestimmen. Da die Zahl der Meßpunkte sehr hoch ist, ist auch die Anzahl der überzähligen Phasenmeßwerte groß. So trägt beispielsweise bei einer Belichtung aus zehn oder zwanzig Richtungen jeder Meßpunkt sieben bzw. siebzehn überzählige Phasenmeßwerte zur Bestimmung der Geometrieparameter der Anordnung bei. Mit Hilfe des erfindungsgemäßen Verfahrens wird folglich ein selbsteinmessendes System zur Verfügung gestellt, da die neben den Meßwerten für eine Koordinatenberechnung unbedingt erforderlichen System- bzw. Geometrieparameter simultan mit den Koordinatenwerten bestimmt werden. Die in der Photogrammetrie notwendige Bestimmung homologer Punkte mit Hilfe von Merkmalen, Korrelationstechniken oder Markierungen entfällt. Für das Zusammenfügen von Teilansichten werden keine Marken oder Paßpunkte benötigt.

Durch das erfindungsgemäße Verfahren und die erfindungsgemäße Vorrichtung ist die Anzahl der überzähligen Meßwerte weit größer als die Anzahl der zu bestimmenden Geometrieparameter. Es ist daher nicht mehr nötig, beispielsweise die optischen Abbildungseigenschaften des Sensorsystems, beispielsweise der CCD-Kamera, zu kennen. Das Meßverfahren wird daher unabhängig von den Eigenschaften der verwendeten Bestandteile des Meßsystems.

Vorteilhafte Weiterbildungen der erfindungsgemäßen Vorrichtung und des erfindungsgemäßen Verfahrens werden in den abhängigen Ansprüchen gegeben.

Als unabhängige Lichtmuster können vorteilhafterweise zwei Streifenmuster, beispielsweise Liniengitter, verwendet werden. Sind diese um einen vorbestimmten Winkel, idealerweise 90°, gegeneinander verdreht, so ist die Auswertung mit Hilfe einfacher mathematischer Algorithmen möglich. Darüber hinaus sind andere Winkeleinstellungen zwischen 0° und 90° möglich. In diesen Fällen kann man auch mehr als zwei Winkelstellungen benutzen.

Als Lichtmuster, dessen Lichtintensität als Summe zweier unabhängiger Lichtmuster beschrieben werden kann, eignet sich beispielsweise ein additives Kreuzgitter. Ein derartiges Kreuzgitter kann als unabhängige Überlagerung zweier um 90° gegeneinander verdrehter periodischer Liniengitter betrachtet werden. In diesem Falle sind insgesamt nur zwei Aufnahmen zur Bestimmung von vier Phasenmeßwerten pro Meßpunkt nötig. Dadurch läßt sich die Meßdauer mit dem erfindungsgemäßen Verfahren weiter verkürzen. Wird zur Belichtung der einzelnen Lichtmuster jeweils dieselbe Projektionsvorrichtung verwendet, so müssen lediglich aus den Phasenmeßwerten die Geometrie- und Abbildungseigenschaften dieser Projektionsvorrichtung bestimmt werden. Selbstverständlich muß in diesem Falle die Projektionsvorrichtung zwischen den einzelnen . Belichtungsvorgängen verschoben werden.

Im folgenden werden einige vorteilhafte Ausführungsbeispiele der beschriebenen Erfindung erläutert.

Es zeigen:

Fig. 1    eine erfindungsgemäße Meßvorrichtung und

Fig. 2    eine schematische Darstellung des erfindungsgemäßen Verfahrens.

Bei dem erfindungsgemäßen Verfahren werden im Unterschied zu den bisher bekannten Streifenprojektions- oder Gray-Code-Verfahren auf das zu vermessende Objekt aus mindestens zwei unterschiedlichen, beliebig auswählbaren Richtungen ein oder mehrere Liniengitter bzw. Gray-Code-Sequenzen projiziert. Für jede Beleuchtungsrichtung werden durch mindestens eine Kamera die erzeugten Intensitätsverteilungen registriert, die eine Berechnung der Phasenmeßwerte unter Verwendung ansonsten bereits bekannter Phase-Step- oder Phase-Shift-Techniken bzw. Kombinationen von Gray-Code- und Phase-Step-Techniken für jeden Meßpunkt erlauben. Dabei bleibt die Position der Kamera bzw. Kameras während der Registrierung unverändert. In einem anschließenden Schritt werden die Gitterlinien oder die Gray-Code-Sequenz um 90° oder auch um einen oder mehrere Winkel zwischen 0° und 90° gedreht und aus der gleichen Richtung erneut auf den Gegenstand projiziert, wobei die Drehachse senkrecht auf der Gitterfläche steht. Es werden wie im ersten Schritt für die Berechnung der Phasenmeßwerte mit der mindestens einen Kamera Intensitätsverteilungen auf der Objektoberfläche aufgenommen. Auch dieser Schritt wird für mindestens eine zweite Beleuchtungsrichtung wiederholt. Die so gemessenen Phasenwerte $\Phi_j$ (Phasenmeßwert für die erste Gitterstellung) und $\Psi_j$ (Phasenmeßwert nach 90° Gitterdrehung) entsprechen Koordinatenmeßwerten in der Gitterebene des Projektors, wobei der Index j die Anzahl der Beleuchtungseinrichtungen oder Beleuchtungsrichtungen angibt. Unter Verwendung der in der Fotogrammetrie üblichen Beschreibung des Zusammenhangs zwischen Maßzahl (Phasenmeßwert) und Koordinaten ergibt sich:

$$\frac{2\pi}{\Lambda}(\Phi_j - \Phi_{jo}) = -c\ \frac{r_{11j}(x-x_{oj}) + r_{21j}(y-y_{oj}) + r_{31j}(z-z_{oj})}{r_{13j}(x-x_j) + r_{23j}(y-y_{oj}) + r_{33j}(z-z_{oj})} \tag{1}$$

$$\frac{2\pi}{\Lambda}(\Psi_j - \Psi_{jo}) = -c\ \frac{r_{12j}(x-x_{oj}) + r_{22j}(y-y_{oj}) + r_{32j}(z-z_{oj})}{r_{13j}(x-x_j) + r_{23j}(y-y_{oj}) + r_{33j}(z-z_{oj})} \tag{2}$$

wobei bedeuten:

$x, y, z$:     Koordinaten des Meßpunktes in einem vorgegebenen Sensorkoordinatensystem,

$x_{oj}, y_{oj}, z_{oj}$ :     Koordinaten der Projektionszentren des Projektionsobjektivs in den unterschiedlichen Projektorpositionen,

$r_{klj}$ :     Matrixelemente einer Drehmatrix, die die Drehung des Gitterkoordinatensystems gegen das Koordinatensystem x, y, z beschreiben,

$\Phi_{jo}\Psi_{jo}$:     Phasenwerte am Hauptpunkt des Projektors,

$c$:     Projektorkonstante, die den senkrechten Abstand zwischen Gitterebene und Projektionszentrum beschreibt. c ist ein Parameter, der für alle Projektorpositionen gleich ist und

$\Lambda$:     Linienabstand des Gitters.

Der funktionale Zusammenhang zwischen Phasenmeßwerten und Koordinaten kann in einfacher Weise so erweitert werden, daß auch die Verzeichnung der Projektorlinse als Geometrieparameter mit berücksichtigt wird. Mit Hilfe bekannter mathematischer Algorithmen können aus den mit mindestens zwei unterschiedlichen Projektionsrichtungen gewonnenen Phasenmeßwerten sowohl die Koordinaten der Meßpunkte als auch die Sensorparameter gleichzeitig berechnet werden.

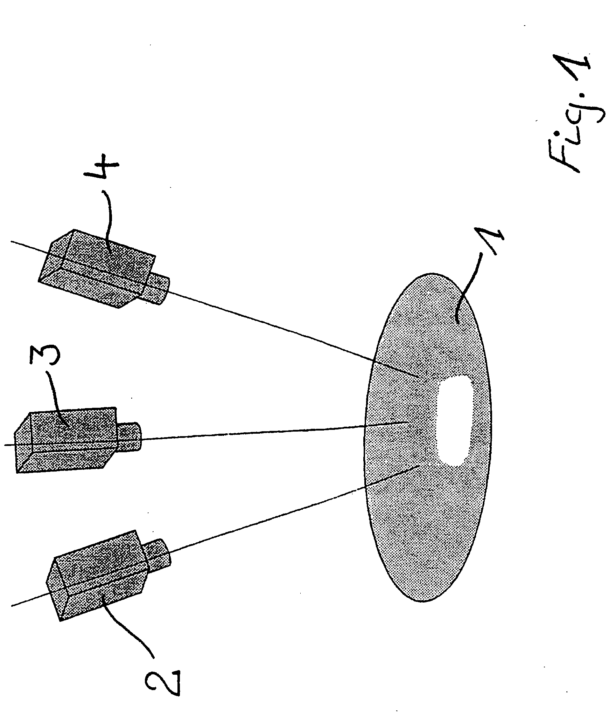

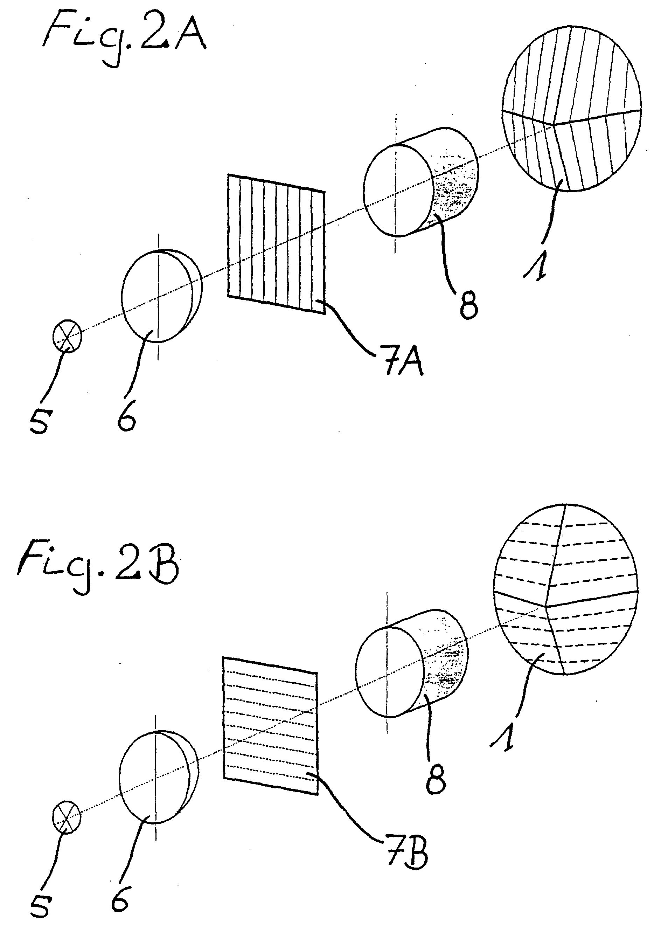

Fig. 1 zeigt eine erfindungsgemäße Meßvorrichtung mit zwei Projektoren 2 und 4 sowie einer CCD-Kamera 3. Wie oben beschrieben, werden mit Hilfe der Projektoren 2 und 4 aus zwei verschiedenen Richtungen jeweils zwei Streifenmuster mit zwischenhzeitlicher Gitterdrehung (Fig. 2A und Fig. 2B) auf einen Gegenstand 1 projiziert, die durch die CCD-Kamera 3 aufgezeichnet werden. Mit Hilfe der oben beschriebenen mathematischen Algorithmen werden aus diesen aufgezeichneten Bildern der Oberfläche des Gegenstandes 1 mindestens vier Phasenmeßwerte für jeden Meßpunkt und aus diesen Phasenmeßwerten die Koordinaten des Meßpunktes sowie die Geometrie- und Abbildungseigenschaften der Meßvorrichtung bestimmt.

Fig. 2 zeigt die aufeinanderfolgende Projektion senkrecht aufeinanderstehender Streifenmuster auf einen Gegenstand 1. Dabei bezeichnen gleiche Bezugszeichen gleiche Elemente. In Fig. 2A ist eine Projektionsvorrichtung dargestellt, die eine Lichtquelle 5, eine Kondensorlinse 6, ein Streifengitter 7a und ein Projektionsobjektiv 8 aufweist. In einem ersten Schritt wird von der Projektionsvorrichtung mit Hilfe des Liniengitters 7a ein senkrecht stehendes Linienmuster auf den zu vermessenden Gegenstand 1 projiziert. Das auf dem Gegenstand 1 erzeugte Streifenmuster wird durch eine Kamera aufgezeichnet. In einem zweiten Schritt wird das Liniengitter 7a um 90° gedreht und wie in Fig. 2B als Liniengitter 7b von der Projektionsvorrichtung auf den Gegenstand 1 projiziert. Auch dieses auf der Oberfläche des zu vermessenden Gegenstandes erzeugte Linienmuster wird von der Kamera aufgezeichnet.

Die mit Fig. 2A und Fig. 2B erläuterten Schritte werden aus einer zweiten Projektionsrichtung wiederholt. Damit stehen insgesamt vier unterschiedliche Lichtmuster zur Auswertung zur Verfügung. Da jedes Lichtmuster für jeden Meßpunkt der Oberfläche des Gegenstandes 1 einen Phasenmeßwert ergibt, stehen pro Meßpunkt vier Phasenmeßwerte zur Bestimmung der Koordinaten der Meßpunkte und der Geometrieparameter der Meßanordnung zur Verfügung.

**Patentansprüche**

1. Verfahren zur Bestimmung der räumlichen Koordinaten von Gegenständen (1) und/oder deren zeitlicher Änderung, wobei der Gegenstand mit einer Projekticnsvorrichtung (2,4) aus mindestens zwei vorbestimmten Richtungen mit Lichtmustern belichtet wird und diese Lichtmuster punktweise - mit mindestens einem räumlich mindestens zweidimensional auflösenden Sensorsystem (3) aufgezeichnet werden,
**dadurch gekennzeichnet,**

**daß** der Gegenstand (1) aufeinanderfolgend aus jeder von mindestens zwei vorbestimmten Richtungen entweder nacheinander mit mindestens zwei unabhängigen Lichtmustern oder mit einem Lichtmuster belichtet wird, dessen Lichtintensitäten als Summe zweier unabhängiger Lichtmuster beschrieben werden kann,

**daß** diese Lichtmuster mit dem mindestens einen Sensorsystem (3) aufgezeichnet werden,

**daß** aus den aufgezeichneten Lichtmustern mindestens vier Phasenmeßwerte für jeden aufgezeichneten Punkt der Oberfläche des Gegenstandes bestimmt werden und

**daß** aus diesen mindestens vier Phasenmeßwerten die räumlichen Koordinaten der Punkte und/oder deren zeitliche Änderung bestimmt werden.

2. Verfahren nach Anspruch 1, **dadurch gekennzeichnet, daß** der Gegenstand (1) aus mindestens einer der mindestens zwei vorbestimmten Richtungen nacheinander mit zwei Streifenmustern, beispielsweise Liniengittern, als unabhängige Lichtmuster belichtet wird.

3. Verfahren nach Anspruch 2, **dadurch gekennzeichnet, daß** der Gegenstand (1) aus mindestens einer der mindestens zwei Richtungen nacheinander mit zwei Streifenmustern belichtet wird, wobei die Streifen der beiden Streifenmuster einen vorbestimmten Winkel einschließen.

4. Verfahren nach Anspruch 3, **dadurch gekennzeichnet, daß** der Gegenstand (1) aus mindestens einer der mindestens zwei Richtungen nacheinander mit zwei Streifenmustern belichtet wird, wobei die Streifen der beiden Streifenmuster senkrecht aufeinander stehen.

5. Verfahren nach mindestens einem der vorhergehenden Ansprüche, **dadurch gekennzeichnet, daß** der Gegenstand (1) aus mindestens einer der mindestens zwei vorbestimmten Richtungen mit einem additiven Kreuzgitter als Lichtmuster, dessen Lichtintensität als Summe zweier unabhängiger Lichtmuster beschrieben werden kann, belichtet wird.

6. Verfahren nach mindestens einem der vorhergehenden Ansprüche, **dadurch gekennzeichnet, daß** statt einzelner Lichtmuster Folgen von Lichtmustern verwendet werden.

7. Verfahren nach Anspruch 6, **dadurch gekennzeichnet, daß** als Folge von Lichtmustern Gray-Code-Sequenzen verwendet werden.

8. Verfahren nach mindestens einem der vorhergehenden Ansprüche, **dadurch gekennzeichnet, daß** für die Belichtungen aus den beiden Richtungen dieselbe Projektionsvorrichtung (2,4) verwendet wird.

9. Vorrichtung zur Anwendung eines Verfahrens zur Bestimmung der räumlichen Koordinaten von Gegenständen (1) und/oder deren zeitlicher Änderung nach mindestens einem der vorhergehenden Ansprüche, **gekennzeichnet durch**

mindestens eine Projektionsvorrichtung (2,4) zur Belichtung der Gegenstände (1) aufeinanderfolgend aus jeder von mindestens zwei vorbestimmten Richtungen entweder nacheinander mit mindestens zwei unabhängigen Lichtmustern oder mit einem Lichtmuster, dessen Lichtintensitäten als Summe zweier unabhängiger Lichtmuster beschrieben werden kann,

mindestens ein räumlich mindestens zweidimensional auflösendes Sensorsystem (3) zur Aufzeichnung der auf die Gegenstände (1) belichteten Lichtmuster sowie

eine Auswerteeinheit, die für jeden der aufgezeichneten Punkte der Oberfläche der Gegenstände aus den aufgezeichneten Lichtmustern mindestens vier Phasenmeßwerte bestimmt und aus den erhaltenen Phasenmeßwerten die Koordinaten der aufgezeichneten Punkte bzw. deren zeitliche Änderung bestimmt.

10. Vorrichtung nach Anspruch 9, **dadurch gekennzeichnet, daß** die Projektionsvorrichtung (2,4) eine zwischen mindestens zwei verschiedenen Positionen bewegbaren Projektionseinheiten aufweist.

11. Vorrichtung nach mindestens einem der Ansprüche 9 und 10, **dadurch gekennzeichnet, daß** die Projektionsvorrichtung (2,4) zwei an verschiedenen Positionen befindliche Projektionseinheiten 2,4) aufweist.

12. Vorrichtung nach mindestens einem der Ansprüche 9 bis 11, **dadurch gekennzeichnet, daß** die Projektionsvorrichtung (2,4) Projektionseinheiten aufweist, die die Gegenstände mit Streifenmuster, Linienmuster und/oder additive Kreuzgitter, deren Lichtintensitäten als Summe zweier unabhängiger Lichtmuster beschrieben werden können, belichtet.

13. Vorrichtung nach mindestens einem der Ansprüche 9 bis 12, **dadurch gekennzeichnet, daß** die Auswerteeinheit so ausgebildet ist, daß sie aus den mindestens vier Phasenmeßwerten pro aufgezeichnetem Punkt der Oberfläche der Gegenstände (1) die Koordinaten der aufgezeichneten Punkte sowie die Parameter der Projektionsvorrichtung (2,4) bestimmt.

**Claims**

1. Process for determining the spatial coordinates of objects (1) and/or their variation as a function of time, where the object is illuminated by a projection device (2, 4) from at least two predetermined directions with light patterns, and where these light patterns are recorded point by point with at least one sensor system (3) with spatial resolution in at least two dimensions,
   **characterised by** the fact

   that the object (1) is illuminated sequentially from each of at least two predetermined directions, either successively with at least two independent light patterns, or with one light pattern whose light intensities can be described as the sum of two independent light patterns,
   that these light patterns are recorded with at least one sensor system (3),
   that from the recorded light patterns, at least four phase measured values are determined for each recorded point on the surface of the object, and
   that, from these at least four phase measured values, the spatial coordinates of the points, and/or their variation as a function of time, are determined.

2. Process as in Claim 1, **characterised by** the fact that the object (1) is illuminated successively, from at least one of the at least two predetermined directions, with two stripe patterns, for example line grid patterns, as independent light patterns.

3. Process as in Claim 2, **characterised by** the fact that the object (1) is illuminated from at least one of the at least two directions successively with two stripe patterns, where the stripes of the two stripe patterns enclose a predetermined angle.

4. Process as in Claim 3, **characterised by** the fact that the object (1) is illuminated from at least one of the at least two directions successively with two stripe patterns, where the stripes of the two stripe patterns lie vertically on top of one another.

5. Process as in at least one of the preceding Claims, **characterised by** the fact that the object (1) is illuminated from at least one of the at least two predetermined directions with an additive lattice grid as a light pattern, the light intensity of which can be described as the sum of two independent light patterns.

6. Process as in at least one of the preceding Claims, **characterised by** the fact that sequences of light patterns are used instead of separate light patterns.

7. Process as in Claim 6, **characterised by** the fact that grey-code sequences are used as a sequence of light patterns.

8. Process as in at least one of the preceding Claims, **characterised by** the fact that the same projection device (2, 4) is used for the illumination from both directions.

9. Device for the use of a process for the determination of the spatial coordinates of objects (1) and/or their variation as a function of time in accordance with at least one of the preceding Claims
   **characterised by**

   at least one projection device (2, 4) for illuminating the objects (1) sequentially from each of at least two predetermined directions, either successively with at least two independent light patterns or with one light pattern whose light intensities can be described as the sum of two independent light patterns,
   at least one sensor system (3) with spatial resolution in at least two dimensions for recording the light patterns projected on to the objects, and
   an evaluation unit which determines, from the recorded light patterns, at least four phase measured values for each of the recorded points on the surface of the objects, and which determines, from the phase measured values obtained, the coordinates of the recorded points and/or their variation as a function of time.

10. Device as in Claim 9, **characterised by** the fact that the projection device (2, 4) has a projection unit which can be moved between at least two different positions.

11. Device as in at least one of Claims 9 to 11, **characterised by** the fact that the projection device (2, 4) has two projection units (2, 4) located in different positions.

12. Device as in at least one of Claims 9 to 11, **characterised by** the fact that the projection device (2, 4) has projection units which illuminate the objects with stripe patterns, line patterns, and/or additive lattice grids whose light intensities can be described as the sum of two independent light patterns.

13. Device as in at least one of Claims 9 to 12, **characterised by** the fact that the evaluation unit is set up in such a way that it determines - from the at least four phase measured values for each recorded point of the surface of the objects (1) - the coordinates of the recorded points and the parameters of the projection device (2, 4).

## Revendications

1. Procédé de détermination de coordonnées spatiales d'objets (1) et /ou de leur variation dans le temps, dans lequel l'objet est irradié par des motifs lumineux au moyen d'un dispositif de projection (2, 4) depuis au moins deux directions prédéterminées, et dans lequel ces motifs lumineux sont enregistrés par points au moyen d'au moins un système de capteur (3) effectuant une séparation en au moins deux dimensions spatiales,
**caractérisé en ce que** l'objet (1) est irradié successivement depuis chacune des deux directions prédéterminées au moins soit consécutivement par au moins deux motifs lumineux indépendants, soit par un motif lumineux dont l'intensité lumineuse peut être décrite comme correspondant à la somme de deux motifs lumineux indépendants,

**en ce que** ces motifs lumineux sont enregistrés au moyen d'au moins un système de capteur (3)
**en ce que**, à partir des motifs lumineux enregistrés, on détermine au moins quatre valeurs de mesure de phase pour chaque point enregistré de la surface de l'objet, et
**en ce que**, à partir de ces quatre valeurs de mesure de phase au moins, on détermine les coordonnées spatiales des points et/ou de leur variation dans le temps.

2. Procédé selon la revendication 1, **caractérisé en ce que** l'objet (1) est irradié depuis au moins une des deux directions prédéterminées au moins consécutivement par deux motifs en bande, par exemple des grilles de lignes, en tant que motifs lumineux indépendants.

3. Procédé selon la revendication 2, **caractérisé en ce que** l'objet (1) est irradié depuis au moins une des deux directions au moins consécutivement par deux motifs en bande, les bandes des deux motifs en bande formant un angle prédéterminé.

4. Procédé selon la revendication 3, **caractérisé en ce que** l'objet (1) est irradié depuis au moins une des deux directions au moins consécutivement par deux motifs en bande, les bandes des deux motifs en bande étant perpendiculaires l'une à l'autre.

5. Procédé selon au moins l'une des revendications précédentes, **caractérisé en ce que** l'objet (1) est irradié depuis au moins une des deux directions prédéterminées au moins par une grille en croix supplémentaire en tant que motif lumineux, dont l'intensité lumineuse peut être décrite comme correspondant à la somme de deux motifs lumineux indépendants.

6. Procédé selon au moins l'une des revendications précédentes, **caractérisé en ce que** l'on utilise une succession de motifs lumineux à la place d'un motif lumineux unique.

7. Procédé selon la revendication 6, **caractérisé en ce que** l'on utilise des séquences de codes Gray en tant que succession de motifs lumineux.

8. Procédé selon au moins l'une des revendications précédentes, **caractérisé en ce que** l'on utilise le même dispositif de projection (2, 4) pour l'irradiation depuis les deux directions.

**9.** Dispositif permettant d'appliquer un procédé de détermination de coordonnées spatiales d'objets (1) et/ou de leur variation dans le temps selon l'une au moins des revendications précédentes, **caractérisé par**

au moins un dispositif de projection (2,4), permettant d'irradier l'objet (1) successivement depuis chacune d'au moins deux directions prédéterminées, soit successivement par au moins deux motifs lumineux indépendants, soit par un motif lumineux dont l'intensité lumineuse peut être décrite comme correspondant à la somme de deux motifs lumineux indépendants,

au moins un système de capteur (3) effectuant une séparation en au moins deux dimensions spatiales et permettant d'enregistrer les motifs lumineux irradiés sur l'objet (1), et

une unité d'exploitation qui, pour chacun des points enregistrés de la surface de l'objet, détermine à partir des motifs lumineux enregistrés, au moins quatre valeurs de mesure de phase et, à partir des valeurs de mesure de phase obtenue, détermine les coordonnées des points enregistrés ou de leur variation dans le temps.

**10.** Dispositif selon la revendication 9, **caractérisé en ce que** le dispositif de projection (2, 4) présente une unité de projection pouvant être déplacée entre au moins deux positions différentes.

**11.** Dispositif selon au moins l'une des revendications 9 et 10, **caractérisé en ce que** le dispositif de projection (2, 4) présente deux unités de projection (2, 4) se trouvant en différentes positions.

**12.** Dispositif selon au moins l'une des revendications 9 à 11, **caractérisé en ce que** le dispositif de projection (2, 4) présente des unités de projection qui irradient les objets par des motifs en bande, des motifs en ligne et/ou des grilles en croix supplémentaires, dont les intensités lumineuses peuvent être décrites comme correspondant à la somme de deux motifs lumineux indépendants.

**13.** Dispositif selon au moins l'une des revendications 9 à 12, **caractérisé en ce que** l'unité d'exploitation est conçue de façon telle que, à partir des quatre valeurs de mesure de phase au moins par point enregistré de la surface de l'objet (1), elle détermine les coordonnées des points enregistrés ainsi que les paramètres du dispositif de projection (2, 4).

EP 0 923 705 B1

Fig. 1

Fig.2A

Fig.2B